# EUROPÄISCHE PATENTSCHRIFT

(11) **EP 3 087 142 B1**
(45) Veröffentlichungstag und Bekanntmachung des Hinweises auf die Patenterteilung: **19.06.2019**
(21) Anmeldenummer: 14827443.4
(22) Anmeldetag: 22.12.2014
(51) Int. Cl.: C08L 27/16, C08L 71/00, C08L 81/04, C08L 81/06, F16C 33/20, C08L 27/18

(54) **SELBSTSCHMIERENDE THERMOPLASTISCHE SCHICHTEN MIT ZUSATZ VON PTFE MIT POLYMODALEM MOLEKULARGEWICHT**
SELF-LUBRICATING THERMOPLASTIC LAYERS CONTAINING PTFE ADDITIVE HAVING A POLYMODAL MOLECULAR WEIGHT
COUCHES THERMOPLASTIQUES AUTOLUBRIFIANTES ADDITIONNÉES DE PTFE À DISTRIBUTION POLYMODALE DE POIDS MOLÉCULAIRE

(30) Priorität: 27.12.2013 DE 102013227188
(43) Veröffentlichungstag der Anmeldung: 02.11.2016
(73) Patentinhaber: Federal-Mogul Wiesbaden GmbH, 65201 Wiesbaden (DE)
(72) Erfinder: ADAM, Achim, 64569 Nauheim (DE); FLEISCHHACKER, Norbert, 64653 Lorsch (DE)
(74) Vertreter: Mehler Achler
(86) Internationale Anmeldenummer: PCT/EP2014/079010
(87) Internationale Veröffentlichungsnummer: WO 2015/097160

(56) Entgegenhaltungen:
- EP-A2- 0 892 017
- JP-A- 2001 040 225
- US-A- 6 057 393
- US-A1- 2001 016 625

## Beschreibung

Die vorliegende Erfindung betrifft ein Gleitelement mit einer metallischen Stützschicht, einer auf der Stützschicht aufgebrachten metallischen porösen Trägerschicht und mit einem auf der porösen Trägerschicht aufgebrachten oder in die poröse Trägerschicht imprägnierten Gleitmaterial, wobei das Gleitmaterial ein thermoplastisches Matrixmaterial und einen PTFE (Polytetrafluorethylen)-Zusatz aufweist. Desweiteren betrifft die Erfindung ein Gleitlager.

Wartungsfreie Gleitelemente, wie beispielsweise Gleitlager, bestehen häufig aus mehrschichtigen Materialien. Auf einem Trägermedium, was meist durch einen Stahlrücken realisiert wird, ist eine poröse Sinterschicht aufgetragen. Diese poröse und meist metallische Komponente ist wiederum mit einem Gleitmaterial imprägniert und zudem von diesem überdeckt. Je nach Art des Matrixkunststoffes des Gleitmaterials wird zwischen zwei verschiedenen Typen unterschieden: Gleitmaterialien auf PTFE-Basis und Gleitmaterialien auf Basis thermoplastisch verarbeitbarer Kunststoffe (kurz: thermoplastische Kunststoffe), um die es vorwiegend geht.

Die Gleitschichten, bestehend aus thermoplastischen Gleitmaterialien, werden entweder mit Vertiefungen versehen, um eine dauerhaft wirkende Schmierstoffmenge aufnehmen zu können, oder sie werden in Form eines mit Schmierstoffen modifizierten Compounds verwendet.

Es hat sich herausgestellt, dass einige dieser Werkstofftypen mit ihren Kunststoffgleitflächen aufgrund ihrer guten Anpassungs- und Schmutzaufnahmefähigkeit sowie hoher Verschleißbeständigkeit auch in mediengeschmierten Anwendungen, wie beispielsweise Pumpen oder hydraulischen Stoßdämpfern, vorteilhaft gegenüber rein metallischen Lagerwerkstoffen sind. Dabei zeichnen sich die PTFE-basierten Werkstoffe durch einen besonders niedrigen Reibkoeffizienten bei Medienschmierung aus, während thermoplastische Werkstoffe sehr verschleißbeständig sein können. Geeignet modifizierte thermoplastische Schichten können die Verschleißfestigkeit und Belastbarkeit der PTFE-basierten Schichten deutlich übertreffen, weisen aber trotz ihrer Modifizierung einen deutlich erhöhten Reibungskoeffizienten bei Medienschmierung auf.

So werden thermoplastische Lagerwerkstoffe seit vielen Jahren in besonders verschleißintensiven mediengeschmierten Anwendungen eingesetzt. Die DE 102 26 264 B4 beschreibt beispielsweise ein speziell für hohe Temperaturen entwickeltes modifiziertes PEEK-Material mit hoher Verschleißfestigkeit. Durch Verwendung dieses Materials sind jedoch die niedrigen Reibkoeffizienten von Werkstoffen auf PTFE-Basis bei Medienschmierung nicht erreichbar.

Aus der DE 198 08 540 B4 sind Materialien auf Thermoplast-Basis bekannt, die durch einen relativ hohen PTFE-Anteil und den Verzicht auf harte Zusatzstoffe günstigere Reibwerte aufweisen, als konventionelle thermoplastische Lagerwerkstoffe, die aber noch immer deutlich über denen der Materialien auf PTFE-Basis liegen.

Die Menge des zusetzbaren PTFE-Anteils ist jedoch begrenzt, da ein zu hoher Anteil die thermoplastische Matrix schwächt, was sich wiederum negativ auf den Verschleißwiderstand des Materials auswirkt.

Zur Lösung dieses Problems wurde in der DE 10 2008 055 195 B4 vorgeschlagen, durch Imprägnierung des Materials mit einer PTFE-Dispersion einen PTFE-Gradienten zu erzeugen, wodurch der Reibkoeffizient vor allem im äußeren Bereich der Gleitschicht deutlich reduziert werden kann. Jedoch reduziert sich hierdurch auch die Verschleißfestigkeit. Ein weiterer Nachteil dieser Vorgehensweise ist das kombinierte Verfahren, bei dem zunächst Pulver, dann eine Flüssigkeit auf ein Bandmaterial aufgebracht werden muss, was einen erhöhten maschinellen Aufwand erfordert.

Es ist daher Aufgabe der Erfindung, die Reibungskoeffizienten der thermoplastischen Werkstoffe bei Medienschmierung zu verbessern, ohne die Verschleißfestigkeit bei Abwesenheit von Schmierung zu beeinträchtigen.

Gelöst wird diese Aufgabe mit einem Gleitelement gemäß Anspruch 1 und einem Gleitlager gemäß Anspruch 12.

Das erfindungsgemäße Gleitelement weist ein thermoplastisches Matrixmaterial und einen PTFE-Zusatz auf. Dieser PTFE-Zusatz weist wiederum wenigstens zwei verschiedene Arten PTFE mit unterschiedlichen Molekulargewichten auf.

Durch Zugabe von PTFE mit wenigstens zwei unterschiedlichen Molekulargewichten können sowohl der Reibungskoeffizient als auch die Verschleißfestigkeit thermoplastisch basierter Gleitmaterialien gleichzeitig optimiert und somit die Gleiteigenschaften der Gleitelemente an die jeweiligen Anforderungen angepasst werden.

Eine Mischung aus zwei Arten PTFE ist beispielsweise aus den Schriften WO 2011/075351 A1 oder US 2001/0016625 A1 bekannt. Die erstgenannte Schrift hat ein Fluorpolymergemisch mit niedrigmolekularem PTFE, hochmolekularem PTFE und wenigstens zwei schmelzverarbeitbaren Fluorpolymeren als Antihaftbeschichtung zum Gegenstand. Die zweitgenannte Schrift befasst sich damit, eine PTFE-Zusammensetzung bereitzustellen, die schmelzverarbeitbar, insbesondere extrudierbar ist.

In einer vorteilhaften Ausführungsform des erfindungsgemäßen Gleitelements umfassen die wenigstens zwei verschiedenen Arten PTFE hochmolekulares (high molecular weight - HMW) PTFE mit einem mittleren Molekulargewicht von > 10⁶ g/mol und niedermolekulares (low molecular weight - LMW) PTFE mit einem mittleren Molekulargewicht von < 10⁶ g/mol, vorzugsweise < 10⁵ g/mol.

Der niedermolekulare PTFE-Anteil kann beispielsweise einer der handelsüblichen Mikropulver-Typen sein. Diese PTFE-Mikropulver können durch Bestrahlung oder thermischen Abbau aus höhermolekularen Typen erzeugt werden, und weisen in der Regel Partikelgrößen in den Größenordnungen einiger µm auf. Das Molekulargewicht der Mikropulver-Typen liegt in Größenordnungen von 10⁴-10⁵ g/mol.

Der hochmolekulare Anteil des PTFE kann beispielsweise aus einem Extrusionstyp mit geeigneter Korngröße, vorzugsweise < 300 µm, bestehen. Die "Extrusionstypen" dienen zur Klassifizierung des PTFE nach dessen Korngröße und/oder Partikelform. Als hochmolekulares PTFE ist ein vorgesintertes Pulver, wie zum Beispiel Rezyklat, besonders bevorzugt. Die hochmolekularen Typen haben Molekulargewichte in den Größenordnungen von 10⁶-10⁷ g/mol.

Die Schmelzviskosität liegt bei den Mikropulver-Typen zwischen 10¹-10⁴ Pa·s und bei den höhermolekularen Typen zwischen 10⁸-10¹⁰ Pa·s.

In einer weiteren vorteilhaften Ausführungsform enthält der PTFE-Zusatz des Gleitmaterials zu 60-95 Vol.-% und insbesondere zu 65-87,5 Vol.-% hochmolekulares PTFE.

Durch diese Zusammensetzung werden signifikante Optima der Verschleißminderung ohne Schmierung und des Reibungskoeffizienten mit Schmierung des Gleitmaterials erreicht. Somit weist das Gleitmaterial den geringsten Reibungskoeffizienten und gleichzeitig die größte Verschleißfestigkeit auf.

Entsprechend enthält der PTFE-Zusatz des Gleitmaterials zu 5-40 Vol.-% und bevorzugt zu 12,5-35 Vol.-% niedermolekulares PTFE.

Die Gesamtmenge des PTFE-Zusatzes beträgt in einer bevorzugten Ausführungsform des Gleitelements zwischen 5-50 Vol.-%, besonders bevorzugt zwischen 15-45 Vol.-% und ganz besonders bevorzugt nicht mehr als 35 Vol.-%, insbesondere zwischen 15 und 35 Vol.-%, des Gleitmaterials.

Die Gesamtmenge an PTFE bezogen auf das Gleitmaterial kann lediglich in bestimmten Grenzen variiert werden. Bei sehr geringen Mengen, insbesondere unter 5 Vol.-%, reduziert sich der reibungs- und verschleißmindernde Effekt zu stark, so dass ein Nutzen des PTFE nicht mehr zum Vorschein kommt. Zu große Mengen an PTFE, insbesondere über 50 Vol.-%, schwächen hingegen den Verbund des Matrixmaterials und führen zu übermäßigem Verschleiß und zu stark verminderter Belastbarkeit der Gleitschicht. Folglich stellt die bevorzugte Ausführungsform ein Optimum zwischen Belastbarkeit und Gleiteigenschaften des Gleitmaterials dar. Eine besonders bevorzugte Mischung weist insgesamt zwischen 15 und 45 Vol.-% PTFE auf, wobei für höher belastete Anwendungen sogar nur bis zu 35 Vol.-% von Vorteil sind.

In einer weiteren vorteilhaften Ausführungsform wird das thermoplastische Matrixmaterial des Gleitmaterials aus wenigstens einem Material aus der Gruppe bestehend aus PA (Polyamid), PVDF (Polyvinylidenfluorid), PFA (Paraformaldehyd), ETFE (Ethylentetrafluorethylen), PPA (Polyphthalamide), PSU (Polysulfon), PEI (Polyetherimid), PEEK (Polyetheretherketon), PPS (Polyphenylensulfid), PESU (Polyethersulfon) oder LCP (Liquid-crystal polymer - flüssigkristalline Polymere) gebildet.

Mittels der unterschiedlichen thermoplastischen Matrixmaterialien kann die Gleitschicht leicht an die unterschiedlichen Anforderungsprofile, die an die Gleitschicht gestellt werden, angepasst werden. Desweiteren besteht viel Erfahrung im Umgang mit diesen Materialien, so dass eine leichte, sichere und schnelle Verarbeitung ermöglicht wird.

Die Gleitschicht weist vorzugsweise weitere Zusätze in Form von Hochtemperaturthermoplasten wie beispielsweise PBA (Polybenzimidazol), PI (Polyimid), PAI (Polyamidimid), PPTA (Poly-p-phenylenterephthalamid), PPA (Polyphthalamid) und/oder PPSO₂ (Polyphenylensulfon) einzeln oder als Mischung auf.

Schmelzverarbeitbare Fluorpolymere weist die Gleitschicht vorzugsweise hingegen nicht auf.

Durch den Zusatz wenigstens eines Hochtemperaturthermoplasten kann die Verschleißbeständigkeit des Gleitmaterials weiter erhöht werden.

Vorzugsweise wird das thermoplastische Matrixmaterial des Gleitmaterials aus einem Material ausgewählt aus der Gruppe PEEK, PPS, PPA und PESU in Kombination mit wenigstens einem der verschleißhemmenden Zusätze PPTA oder PPSO₂ gebildet.

Es hat sich herausgestellt, dass mit dieser Kombination der Materialen die Verschleißbeständigkeit des thermoplastischen Matrixmaterials optimiert werden kann.

Um das Eigenschaftsprofil des Gleitmaterials weiter zu optimieren, weist dieses weitere zusätzliche Komponenten wie Festschmierstoffe, Fasermaterialien und/ oder Hartstoffe auf.

Hartstoffe können beispielsweise eine Glättung des Gegenläufers bewirken. Hierdurch verringert sich dessen Abrasivität, wodurch die Langzeitstabilität des Gleitmaterials erhöht wird. Festschmierstoffe und Fasermaterialien bewirken ebenfalls Veränderungen in der Verschleißbeständigkeit und in den Gleiteigenschaften des Gleitmaterials, wodurch durch Zugabe dieser Stoffe das Gleitmaterial an die Anforderungsbedingungen gezielt angepasst werden kann.

Vorzugsweise beträgt der zusätzliche Anteil der Komponenten Hochtemperaturthermoplasten, Festschmierstoffe, Fasermaterialien und/oder Hartstoffe zusammen maximal 30% des Gleitmaterials.

Bei höheren Anteilen dieser Materialien verringert sich die Gleitfähigkeit des Gleitmaterials, so dass der Verschleiß und der Reibungswiderstand zu hoch werden. Desweiteren verringert sich die Matrixstabilität bei einem zu hohen Anteil von zusätzlichen Komponenten.

In einer vorteilhaften Ausführungsform enthält das Gleitmaterial wenigstens einen Festschmierstoff ausgewählt aus der Gruppe MOS₂, WS₂, hBN (hexagonales Bornitrid), Pb, PbO, ZnS, BaSO₄, CaF₂ und Graphit.

Diese Ausführungsform hat die Vorteile einer Reduktion des Reibungswiderstandes, insbesondere bei Trockenlauf.

Vorzugsweise weist das Gleitmaterial Fasermaterialien aus Kohlefasern auf Pech- oder PAN-Basis, Polyaramidfasern und/oder Glasfasern auf.

Durch die zusätzliche Verwendung von Fasermaterialien können die mechanischen Eigenschaften des Gleitmaterials und insbesondere die Zugfestigkeit und Scherfestigkeit des Gleitmaterials verbessert werden.

Vorzugsweise besteht das Fasermaterial aus Kurzfasern mit einer Faserlänge von kleiner 1,5 mm und insbesondere kleiner 0,5 mm.

Fasermaterial aus Kurzfasern lässt sich bei der Herstellung des Gleitmaterials leichter innerhalb der thermoplastischen Matrix homogen verteilen, als beispielsweise Langfasern. Dies ermöglicht zudem eine homogene Eigenschaftsverteilung innerhalb des Gleitmaterials.

Die Hartstoffe werden in einer weiteren vorteilhaften Ausführungsform des Gleitmaterials aus wenigstens eines der Materialien ausgewählt aus der Gruppe SiC, Si₃N₄, BC, cBN (kubisches Bornitrid), Schichtsilikate, Metalloxide und Fe₂O₃ gebildet.

Hartstoffe bieten beispielsweise die Möglichkeit, den Gegenläufer insbesondere in der Einlaufphase zu konditionieren. Hierdurch werden eventuell bestehende Unebenheiten in der Gleitfläche des Gegenläufers geglättet, wodurch ein späterer Verschleiß vermindert und die zwischen den Gleitpartnern auftretende Reibung minimiert wird.

Vorteilhafterweise weist das hochmolekulare PTFE eine Korngröße von < 300 µm auf.

Bei der Herstellung des Gleitmaterials bewirkt eine Verwendung des hochmolekularen PTFEs mit Korngrößen von unter 300 µm eine ausreichend feine und homogene Verteilung des PTFEs innerhalb der thermoplastischen Matrix. Eine homogene Eigenschaftsverteilung des kompletten Gleitmaterials kann somit ermöglicht werden.

Desweiteren umfasst die Erfindung ein Gleitlager, insbesondere eine Buchse, eine Lagerschale oder eine Anlaufscheibe, welche jeweils aus einem erfindungsgemäßen Gleitelement gebildet sind.

Weitere und beispielhafte Ausführungsformen sowie weitere Merkmale des erfindungsgemäßen Gleitelements und des erfindungsgemäßen Radialgleitlagers werden anhand der nachfolgenden Figuren näher erläutert.

Es zeigen:
- Figur 1: das Verschleißverhalten verschiedener erfindungsgemäßer Gleitmaterialzusammensetzungen und
- Figur 2: den Reibungskoeffizienten verschiedener erfindungsgemäßer Gleitmaterialzusammensetzungen.

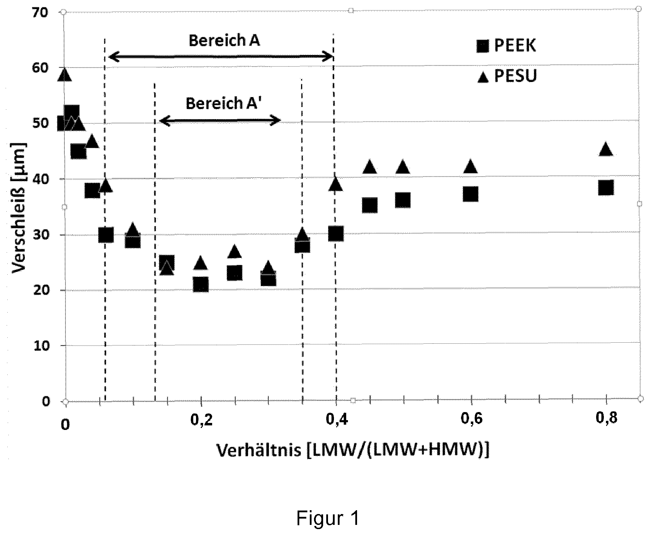

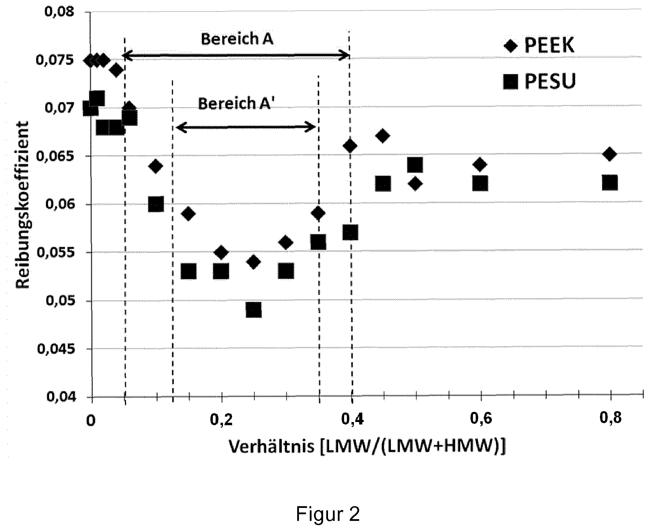

In den beiden Figuren 1 und 2 werden zwei Diagramme mit jeweils zwei Messreihen, durchgeführt an erfindungsgemäßen Zusammensetzungen mit 30 Vol.-% PTFE und PEEK beziehungsweise PESU als Matrixmaterial, gezeigt. Die Zusammensetzung des PTFEs variiert darin jeweils so, dass die Gesamtmenge an PTFE zwischen 0 und 80 Vol.-% niedrigmolekulares PTFE, Rest hochmolekulares PTFE enthält.

Im Folgenden wird beispielhaft die Herstellung erfindungsgemäßer Gleitmaterialien und der Vergleichsproben für eine vergleichende Stift-Walze-Prüfung sowie deren Durchführung erläutert.

In einem Blender mit Schlagmesser, beispielsweise einem 1000 ml Laborblender, werden die Substanzen in den erfindungsgemäßen Zusammensetzungen, z.B. 70 g PEEK, 15 g HMW-PTFE, 7,5 g LMW PTFE und 7,5 g PPTA, 30 Sekunden lang bei 18000 UpM gemischt. Anschließend wird dieses Gemisch auf beispielsweise ein Stahlband mit einer 300 µm dicken aufgesinterten Bronzeauflage mit circa 30 % Porenvolumen in Form einer 1 mm dicken Pulverschicht aufgerakelt und für 5 min auf 380 °C erhitzt. Nach einer kurzen Abkühlzeit der Oberfläche an der Luft wird die Probe so verwalzt, dass die noch plastische Schicht verdichtet und in die Poren eingedrückt wird.

Für die Stift-Walze-Prüfung wird aus dem vollständig abgekühlten Probenband ein runder Prüfkörper mit 10 mm Durchmesser ausgestanzt. Die Dicke des Prüfkörpers wird vermessen und der Prüfkörper wird mit einer definierten Last von beispielsweise 20 MPa auf einen trockenen, fettfreien und mit 100 UpM rotierenden Stahlzylinder mit einem Durchmesser von 100 mm aufgedrückt. Die Rauigkeit des Stahlzylinders auf der Kontaktfläche (Mantelfläche des Stahlzylinders) zu dem Prüfkörper liegt anfänglich bei circa Rz = 1 µm. Nach Abschluss der Prüfung wird die Dicke erneut gemessen und aus der Differenz der Dicken vorher und nachher die Verschleißrate berechnet. Die Reibungskoeffizienten werden über einen Drehmomentsensor im Stahlzylinderantrieb ermittelt.

Für eine geschmierte Prüfung wird die Prüfspur zusätzlich mittels Docht kontinuierlich mit Stoßdämpferöl benetzt.

In dem Diagramm der Figur 1 ist der Verschleiß in µm zweier verschiedener erfindungsgemäßer Gleitmaterialien (30 Vol.-% PTFE in dem Matrixmaterial PEEK und 30 Vol.-% PTFE in dem Matrixmaterial PESU, wobei jeweils die Zusammensetzung des PTFE so variiert ist, dass die Gesamtmenge an PTFE von 0 bis 80 Vol.-% niedrigmolekulares PTFE, Rest hochmolekulares PTFE enthält), abhängig von dem Verhältnis des Anteils an niedrigmolekularem PTFE zum Gesamtvolumen des PTFEs, aufgetragen. Ermittelt wurden diese Daten im voran beschriebenen Stift-Walze-Test bei einer Last von 20 MPa und einer Relativgeschwindigkeit von 0,5 m/s ohne Schmierung,

Es ist erkennbar, dass der Verschleiß ohne niedrigmolekulares PTFE (dies entspricht 100 Vol.-% hochmolekularem PTFE; im Koordinatenursprung der x-Achse) am größten ist. Mit steigendem Verhältnis und somit steigendem Anteil an niedrigmolekularem PTFE sinkt der Verschleiß, so dass dieser im erfindungsgemäßen Bereich A (5-40 Vol.-% niedrigmolekulares PTFE) deutlich unterhalb der allein eingesetzten PTFE-Arten (nur hochmolekulares oder nur niedrigmolekulares PTFE) liegt. In dem bevorzugten Bereich A' (12,5-35 Vol.-% niedrigmolekulares PTFE) befinden sich die Verschleißwerte auf einem nochmals signifikant niedrigeren Niveau. Mit weiter steigendem Anteil an niedermolekularem PTFE erhöht sich der Verschleiß, bis er ab etwa 45 Vol.-% ein Plateau erreicht. Dieses Ergebnis gilt sowohl für die PEEK- als auch für die PESU-Matrix.

In dem Diagramm der Figur 2 ist der Reibungskoeffizient der gleichen erfindungsgemäßen Gleitmaterialien (30 Vol.-% PTFE in dem Matrixmaterial PEEK und 30 Vol.-% PTFE in dem Matrixmaterial PESU, wobei jeweils die Zusammensetzung des PTFE so variiert ist, dass die Gesamtmenge an PTFE zwischen 0 und 80 Vol.-% niedrigmolekulares PTFE enthält) aus Figur 1, abhängig von dem Verhältnis des niedrigmolekularen PTFEs zum Gesamtvolumen des PTFEs, ermittelt im voran beschriebenen Stift-Walze-Test bei 20 MPa und 0,5 m/s mit Schmierung, aufgetragen.

Hier ist erkennbar, dass auch der Reibungskoeffizient ohne niedrigmolekulares PTFE (im Koordinatenursprung der x-Achse) am größten ist. Mit steigendem Verhältnis und somit steigendem Anteil an niedrigmolekularem PTFE verringert sich auch der Reibungskoeffizient, so dass dieser im erfindungsgemäßen Bereich A (5-40 Vol.-% niedrigmolekulares PTFE) deutlich unterhalb der allein eingesetzten PTFE-Arten (nur hochmolekulares oder nur niedrigmolekulares PTFE) liegt. In dem bevorzugten Bereich A' (12,5-35 Vol.-% niedrigmolekulares PTFE) befinden sich die Reibungskoeffizienten auf einem nochmals signifikant niedrigeren Niveau. Mit weiter steigendem Anteil an niedermolekularem PTFE erhöht sich der Reibungskoeffizient, bis er ab etwa 45 Vol.-% ein Plateau erreicht.

Eine Zusammenfassung beispielhafter erfindungsgemäßer Gleitmaterialzusammensetzungen ist in der folgenden Tabelle aufgeführt:

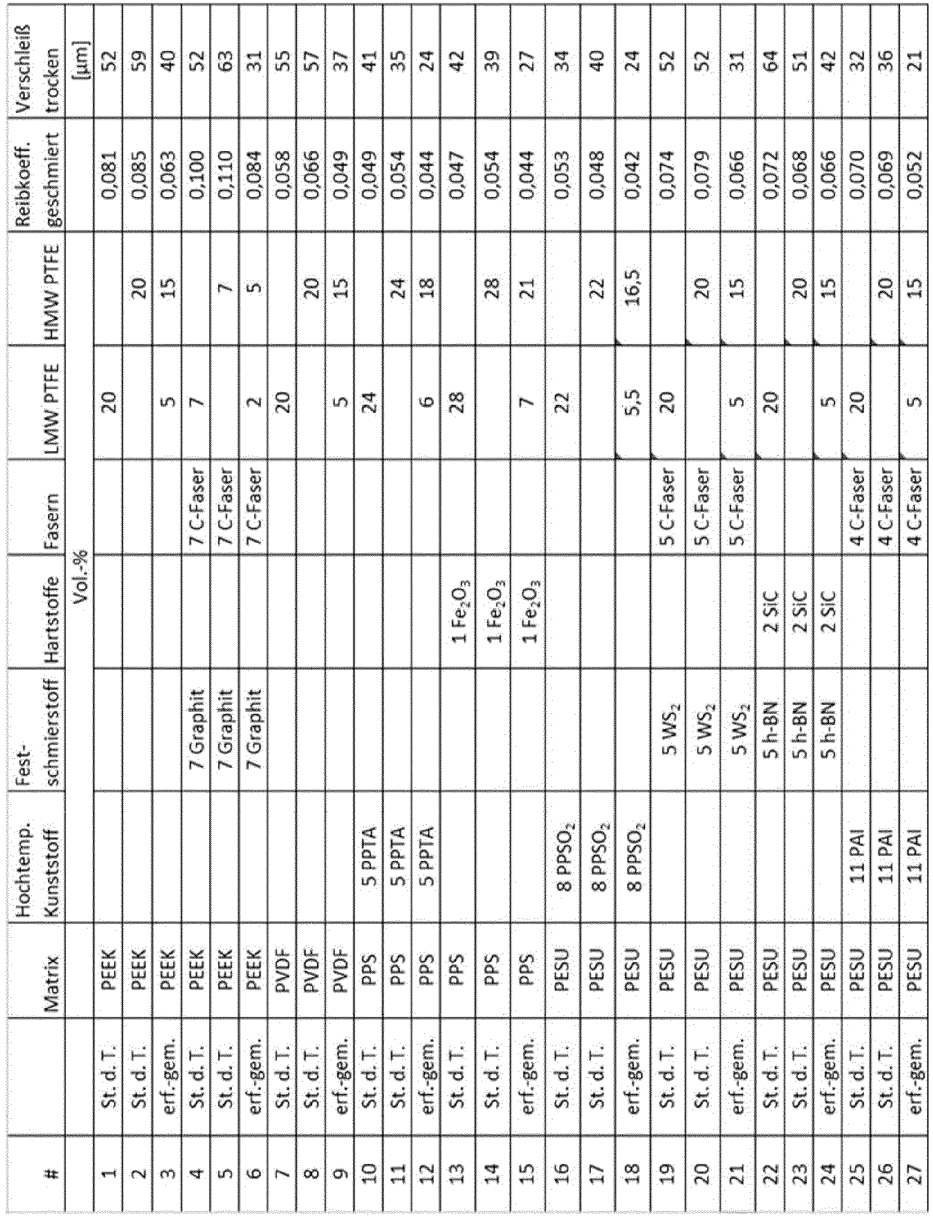

Die Tabelle zeigt verschiedene erfindungsgemäße Ausführungsbeispiele des Gleitmaterials, die mittels Stift-Walze-Prüfung bei 20 MPa und 0,5 m/s mit und ohne Schmierung geprüft wurden. Zu jedem in der Tabelle aufgeführten erfindungsgemäßen Beispiel sind zwei Vergleichstests aufgeführt, in denen jeweils Zusammensetzungen außerhalb der Erfindung mit nur einer der beiden PTFE-Arten untersucht wurden. Dabei wurden Zusammensetzungen mit einer Vielzahl verschiedener Matrixmaterialien, wie PEEK, PVDF, PPS oder PESU, verschiedener Festschmierstoffe oder Hartstoffe sowie Fasern untersucht. Die Anteile von LMW und HMW PTFE der erfindungsgemäßen Zusammensetzung variierten dabei von 2:5; 5:15; 5,5:16,5 über 6:18 bis hin zu 7:21 Vol.-%.

Alle erfindungsgemäß zusammengesetzten Gleitmaterialien weisen unabhängig von dem Matrixmaterial oder den zusätzlichen Festschmierstoffen, Hartstoffen oder Fasern einen geringeren Verschleiß ohne Schmierung und gleichzeitig einen geringeren Reibungskoeffizienten mit Schmierung als Gleitmaterialien mit gleichem PTFE-Anteil einer Art und ansonsten identischer Zusammensetzung auf.

## Patentansprüche

1. Gleitelement mit einer metallischen Stützschicht, mit einer auf der Stützschicht aufgebrachten metallischen porösen Trägerschicht und mit einem auf der porösen Trägerschicht aufgebrachten oder in die poröse Trägerschicht imprägnierten Gleitmaterial, das ein thermoplastisches Matrixmaterial und einen PTFE-Zusatz aufweist,
wobei der PTFE-Zusatz wenigstens zwei verschiedene Arten PTFE mit unterschiedlichen Molekulargewichten aufweist.

2. Gleitelement nach Anspruch 1, **dadurch gekennzeichnet, dass** der PTFE-Zusatz zu 60-95 Vol.-% und vorzugsweise zu 65-87,5 Vol.-% hochmolekulares PTFE enthält.

3. Gleitelement nach Anspruch 2, **dadurch gekennzeichnet, dass** der PTFE-Zusatz zu 5-40 Vol.-% und vorzugsweise zu 12,5-35 Vol.-% niedermolekulares PTFE enthält.

4. Gleitelement nach einem der Ansprüche 1 bis 3, **dadurch gekennzeichnet, dass** die Gesamtmenge des PTFE-Zusatzes 5-50 Vol.-% und vorzugsweise 15-45 Vol.-% des Gleitmaterials beträgt.

5. Gleitelement nach einem der Ansprüche 1 bis 4, **dadurch gekennzeichnet, dass** das thermoplastische Matrixmaterial aus wenigstens einem Material aus der Gruppe bestehend aus PA, PVDF, PFA, ETFE, PPA, LCP, PSU, PEI, PEEK, PPS, und PESU gebildet ist.

6. Gleitelement nach einem der Ansprüche 1 bis 5, **dadurch gekennzeichnet, dass** das thermoplastische Matrixmaterial mit wenigstens einem verschleißhemmenden Zusatz, ausgewählt aus der Gruppe PBA, PI, PAI, PBI, PPTA und PPSO₂ versehen ist.

7. Gleitelement nach Anspruch 5 oder 6, **dadurch gekennzeichnet, dass** das thermoplastische Matrixmaterial aus einem Material ausgewählt aus der Gruppe PEEK, PPS, PPA und PESU in Kombination mit wenigstens einem der verschleißhemmenden Zusätze PPTA oder PPSO₂ gebildet ist.

8. Gleitelement nach einem der Ansprüche 1 bis 7, **gekennzeichnet durch,** einen zusätzlichen Anteil wenigstens einer der Komponenten Festschmierstoffe, Fasermaterialien und Hartstoffe.

9. Gleitelement nach Anspruch 8, **dadurch gekennzeichnet, dass** der zusätzliche Anteil der verschleißhemmenden Zusätze sowie der Komponenten Festschmierstoffe, Fasermaterialien und Hartstoffe zusammen maximal 30 Vol.-% des Gleitmaterials beträgt.

10. Gleitelement nach Anspruch 8 oder 9, **dadurch gekennzeichnet, dass** die Festschmierstoffe wenigstens eines der Materialien ausgewählt aus der Gruppe bestehend aus MOS₂, WS₂, hBN, Pb, PbO, ZnS, BaSO₄, CaF₂ und Graphit enthält.

11. Gleitelement nach Anspruch 8 oder 9, **dadurch gekennzeichnet, dass** die Hartstoffe wenigstens eines der Materialien ausgewählt aus der Gruppe bestehend aus SiC, Si₃N₄, BC, cBN, Schichtsilikate, Metalloxide und Fe₂O₃ sind.

12. Gleitlager, insbesondere Buchse, Lagerschale oder Anlaufscheibe,
**dadurch gekennzeichnet,**
**dass** dieses aus wenigstens einem Gleitelement gemäß einem der Ansprüche 1 bis 11 gebildet ist.

## Claims

1. Sliding element having a metal protective layer, having a porous metal carrier layer which is applied to the protective layer and having a sliding material which is applied to the porous carrier layer or impregnated in the porous carrier layer and which has a thermoplastic matrix material and a PTFE additive,
wherein the PTFE additive has at least two different types of PTFE with different molecular weights.

2. Sliding element according to claim 1, **characterised in that** the PTFE additive contains up to 60-95% by volume and preferably up to 65-87.5% by volume of high-molecular PTFE.

3. Sliding element according to claim 2, **characterised in that** the PTFE additive contains up to 5-40% by volume and preferably up to 12.5-35% by volume of low-molecular PTFE.

4. Sliding element according to any one of claims 1 to 3, **characterised in that** the entire quantity of the PTFE additive is from 5 to 50% by volume and preferably from 15 to 45% by volume of the sliding material.

5. Sliding element according to any one of claims 1 to 4, **characterised in that** the thermoplastic matrix material is formed from at least one material of the group comprising PA, PVDF, PFA, ETFE, PPA, LCP, PSU, PEI, PEEK, PPS and PESU.

6. Sliding element according to any one of claims 1 to 5, **characterised in that** the thermoplastic matrix material is provided with at least one wear-inhibiting additive, selected from the group PBA, PI, PAI, PBI, PPTA and PPSO₂.

7. Sliding element according to claim 5 or 6, **characterised in that** the thermoplastic matrix material is formed from a material selected from the group PEEK, PPS, PPA and PESU in combination with at least one of the wear-inhibiting additives PPTA or PPSO₂.

8. Sliding element according to any one of claims 1 to 7, **characterised by** an additional proportion of at least one of the components solid lubricants, fibre materials and hard materials.

9. Sliding element according to claim 8, **characterised in that** the additional proportion of the wear-inhibiting additives and the components solid lubricants, fibre materials and hard materials together is a maximum of 30% by volume of the sliding material.

10. Sliding element according to claim 8 or 9, **characterised in that** the solid lubricants contain at least one of the materials selected from the group comprising MOS₂, WS₂, hBN, Pb, PbO, ZnS, BaSO₄, CaF₂ and graphite.

11. Sliding element according to claim 8 or 9, **characterised in that** the hard materials are at least one of the materials selected from the group comprising SiC, Si₃N₄, BC, cBN, layered silicates, metal oxides and Fe₂O₃.

12. Plain bearing, in particular bush, bearing shell or thrust washer, **characterised in that** it is formed from at least one sliding element according to any one of claims 1 to 11.

## Revendications

1. Élément de glissement comportant une couche de support métallique, une couche porteuse métallique poreuse appliquée sur la couche de support et un matériau de glissement qui est appliqué sur la couche porteuse poreuse ou imprégné dans la couche porteuse poreuse et qui présente un matériau à matrice thermoplastique et un additif PTFE,
l'additif PTFE présentant au moins deux types différents de PTFE de poids moléculaires différents.

2. Élément de glissement selon la revendication 1, **caractérisé en ce que** l'additif PTFE contient de 60 à 95 % en volume et de préférence de 65 à 87,5 % en volume de PTFE de poids moléculaire élevé.

3. Élément de glissement selon la revendication 2, **caractérisé en ce que** l'additif PTFE contient de 5 à 40 % en volume et de préférence de 12,5 à 35 % en volume de PTFE de faible poids moléculaire.

4. Élément de glissement selon l'une des revendications 1 à 3, **caractérisé en ce que** la quantité totale de l'additif PTFE est de 5 à 50 % en volume et de préférence de 15 à 45 % en volume du matériau de glissement.

5. Élément de glissement selon l'une des revendications 1 à 4, **caractérisé en ce que** le matériau à matrice thermoplastique est formé d'au moins un matériau du groupe constitué par PA, PVDF, PFA, ETFE, PPA, LCP, PSU, PEI, PEEK, PPS et PESU.

6. Élément de glissement selon l'une des revendications 1 à 5, **caractérisé en ce que** le matériau à matrice thermoplastique est pourvu d'au moins un additif inhibiteur d'usure choisi dans le groupe constitué par PBA, PI, PAI, PBI, PPTA et PPSO₂.

7. Élément de glissement selon la revendication 5 ou 6, **caractérisé en ce que** le matériau à matrice thermoplastique est formé d'un matériau choisi dans le groupe constitué par PEEK, PPS, PPA et PESU en combinaison avec au moins l'un des additifs inhibiteurs d'usure PPTA ou PPSO₂.

8. Élément de glissement selon l'une quelconque des revendications 1 à 7, **caractérisé par** une proportion supplémentaire d'au moins l'un des composants suivants : lubrifiants solides, matériaux fibreux et substances dures.

9. Élément de glissement selon la revendication 8, **caractérisé en ce que** la proportion supplémentaire d'additifs inhibiteurs d'usure ainsi que des composants lubrifiants solides, matériaux fibreux et substances dures représente ensemble au maximum 30 % en volume du matériau de glissement.

10. Élément de glissement selon la revendication 8 ou 9, **caractérisé en ce que** les lubrifiants solides contiennent au moins l'un des matériaux choisis dans le groupe constitué par MoS₂, WS₂, hBN, Pb, PbO, ZnS, BaSO₄, CaF₂ et graphite.

11. Élément de glissement selon la revendication 8 ou 9, **caractérisé en ce que** les substances dures sont au moins l'un des matériaux choisis dans le groupe constitué par SiC, Si₃N₄, BC, cBN, phyllosilicates, oxydes métalliques et Fe₂O₃.

12. Palier lisse, en particulier bague, coussinet ou rondelle de butée,
**caractérisé en ce**
**qu'**il est formé d'au moins un élément de glissement selon l'une des revendications 1 à 11.
